# EUROPEAN PATENT APPLICATION

(11) **EP 1 462 428 A2**
(43) Date of publication of application: **29.09.2004**
(21) Application number: 04007387.6
(22) Date of filing: 26.03.2004
(51) Int. Cl.: C04B 35/626, C04B 35/495, C04B 35/50

(54) **Method of producing perovskite complex oxide and precursor substance used in the method**

(30) Priority: 28.03.2003 JP 2003090080; 02.12.2003 JP 2003402935
(71) Applicant: Dowa Mining Co., Ltd., Tokyo 100-8282 (JP)
(72) Inventor: Mafune, Shuichi, Chiyoda-ku Tokyo 100-8282 (JP); Suda, Hisashi, Chiyoda-ku Tokyo 100-8282 (JP)
(74) Representative: Wagner, Karl H., Dipl.-Ing.

(57) **Abstract**

A method of producing a perovskite complex oxide is provided wherein, at the time of producing a perovskite (RTO₃) complex oxide phase by heat treating a precursor substance that is a powdery starting material containing at least one rare earth element R and at least one transition metal element T, there is used as the precursor substance an amorphous substance containing the R and T components at the content ratio required for producing the complex oxide. The obtained perovskite complex oxide has a specific surface area exceeding 10 m²/g.

## Description

### BACKGROUND OF THE INVENTION

### Field of the Invention:

This invention relates to a method of producing perovskite complex oxide of small particle diameter and large specific surface area at low cost.

### Background Art:

Efforts have been made to apply perovskite complex oxides to a wide range of applications, including catalysts, superconductors, piezoelectric elements, sensors, fuel cell electrolyte and various others. Some applications, as in catalysts and sensors, utilize an interaction between substances, so that the amount of the points of action on the surface has a major influence on the characteristics. The level of activity can therefore be expected to increase with increasing specific surface area.

However, as reported by N. Yamazoe, Y. Teraoka et al. in Catalysis Today, p.175-199, 8 (1990), perovskite complex oxides produced by the ceramic process, oxalate thermal decomposition process, acetate thermal decomposition process and the like have a specific surface area of 10 m²/g or less and therefore cannot provide adequate performance when used in catalysts and sensors.

In order to obtain a perovskite complex oxide with high specific surface area, the crystal growth of the perovskite complex oxide has to be conducted at a low temperature. Perovskite complex oxides of a specific surface area of 30 m²/g and higher have recently been reported. For example, the citric acid decomposition process, cyanogen salt decomposition process, freeze-dry process and the like are said to be capable of producing perovskite complex oxides from the 500 - 700 °C temperature zone.

The particle diameter of the precursors used as starting material in the conventional ceramic process, oxalate decomposition process and acetate thermal decomposition process is generally large (e.g. on the sub-micron order at the smallest) and not uniform. Such precursors therefore must be heat treated at a high temperature of 850 °C or higher because the constituent elements that generate the crystal phase of the perovskite complex oxide are required to disperse over long distances. As a result, the specific surface area of the perovskite complex oxide can attain only a low value of 10 m²/g or less.

The citric acid decomposition process, cyanogen salt decomposition process, freeze-dry process and the like were developed to cope with this situation. These processes enable production of a perovskite complex oxide at temperatures in the range of 500 - 700 °C, thus making it possible to obtain a perovskite complex oxide with large specific surface area. However, the citric acid complex process produces NOx and other toxic gases during drying and baking and therefore requires toxic gas treatment measures, the cyanogen salt decomposition process requires use of a toxic cyanogen salt as the starting material, and the freeze-dry process requires complex equipment owing to the need for low-temperature, low-pressure treatment. From this it can be seen that all of these methods have problems regarding industrial utilization from the points of environmental protection and/or cost.

### SUMMARY OF THE INVENTION

An object of the present invention is therefore to overcome the foregoing problems, specifically to enable production of perovskite complex oxide of high specific surface area on an industrial scale at low cost and with good reproducibility by a safe method that does not involve use or generation of toxic substances.

To achieve this object, the inventors first carried out a detailed study of the conventional perovskite complex oxide reaction processes reported up to now. By this it was found that the conventional processes have a common aspect in that all pass through a hydroxide, carbonate, oxalate, acetate, cyanogen salt, oxide or other crystalline intermediate substance on the way to the perovskite complex oxide. When it is attempted to produce the desired perovskite complex oxide through the route of such crystalline intermediate substance as above, use of high-temperature heat treatment extending over a long period is inevitable. Unless a crystalline intermediate substance passed through, it should be possible to obtain a perovskite complex oxide by heat treatment at a low temperature.

Focusing on this point, in the present invention is directed to enabling production of a perovskite complex oxide without passing through a hydroxide, carbonate, oxalate, acetate, cyanogen salt, oxide or other crystalline intermediate substance. Specifically, the present invention provides a method of producing a perovskite complex oxide wherein, at the time of producing a perovskite (RTO₃) complex oxide phase by heat treating a precursor substance that is a powdery starting material containing at least one rare earth element R and at least one transition metal element T, there is used as the precursor substance an amorphous substance containing the R and T components at the content ratio required for producing the complex oxide.

The heat treatment of this amorphous substance directly produces the perovskite complex oxide without going through any crystalline intermediate substance like those mentioned above. Moreover, the perovskite complex oxide phase can be produced at a low treatment temperature of around 400 °C. Actually, the perovskite complex oxide phase can be generated without passing through a crystalline intermediate substance by heat treatment at a temperature of 400°C - 700 °C.

The amorphous substance used as such a precursor substance can be obtained by precipitation from an aqueous solution containing R ions and T ions using a precipitant, i.e., by a wet process. It can, for example, be obtained by reacting an aqueous solution of a mineral acid salt of R and a mineral acid salt of T with a precipitant at a reaction temperature not higher than 60 °C and pH of 6 or higher and harvesting the precipitate. A precursor substance of still higher specific surface area can be obtained by adding a reducing agent in addition to the precipitant. When a reducing agent is added, the pH of the solution should be made somewhat higher than when only a precipitant is used. Alkaline carbonate or carbonate containing ammonium ions can be used as the precipitant. The combination of ammonia and carbon dioxide also can be used as the precipitant, wherein ammonia preferably aqueous ammonia is added, then gaseous carbon dioxide is added into the solution. A hydrogen-generating compound can be used as the reducing agent.

The present invention provides a precursor substance to be subjected to heat treatment for producing a perovskite complex oxide phase, specifically a precursor substance of a perovskite complex oxide, which is composed of an amorphous substance containing the R and T components at the content ratio required for producing the complex oxide.

The present invention enables production of a perovskite complex oxide directly from an amorphous material, without passing through a hydroxide, carbonate, oxalate, acetate, cyanogen salt, oxide or other such crystalline intermediate substance. Specifically, use of the precursor substance according to the present invention enables production of a desired perovskite complex oxide using low-temperature, short-period heat treatment conditions and, as such, enables production of an active perovskite oxide having high specific surface area unattainable heretofore.

### BRIEF DESCRIPITON OF THE DRAWINGS

Figure 1 shows X-ray diffraction patterns of burned products obtained by baking a precursor substance according to the present invention at different heat treatment temperatures.
Figure 2 is a transmission electron micrograph of a precursor substance according to the present invention.
Figure 3 shows X-ray diffraction patterns of burned products obtained by baking a comparative precursor substance at different temperatures.
Figure 4 is a transmission electron micrograph of a comparative precursor substance.
Figure 5 shows X-ray diffraction patterns of burned products obtained by baking another precursor substance according to the present invention at different heat treatment temperatures.
Figure 6 is a transmission electron micrograph of another precursor substance according to the present invention.

### DESCRIPTION OF THE PREFERRED EMBODIMENTS

A perovskite complex oxide can be represented by the general formula RTO₃ (where R is at least one rare earth element and T is at least one transition metal element). The present invention enables production of a perovskite complex oxide through a direct reaction route from an amorphous material to the perovskite complex oxide, without passing through a hydroxide, carbonate, oxalate, acetate, cyanogen salt, oxide or other crystalline intermediate substance as is the conventional practice. It therefore enables production of a desired perovskite complex oxide using low-temperature, short-period heat treatment conditions. The rare earth element R can be, but is not particularly limited to, Y, La, Ce, Nd, Sm, Pr or the like. The transition metal element T can be, but is not particularly limited to, Co, Fe, Ni, Mn, Cu, Cr, V, Nb, Ti, Zr, Pt, Pd, Ru, Rh or the like.

The amorphous material to serve as a precursor for producing a perovskite complex oxide is a powdery amorphous substance containing R element(s) and T element(s). Such a precursor can be produced by a wet process, i.e., by using an appropriate process to precipitate it from an aqueous solution containing ions of these elements.

The amorphous material of the present invention for use as a precursor for producing a perovskite complex oxide has at least one rare earth element and at least one transition metal element as its primary constituents and is an amorphous material containing the R and T components at the content ratio required for producing the complex oxide, i.e., an amorphous substance in its unmodified state having a broad X-ray diffraction spectrum pattern with no distinct peak present. The substance is preferably maintained in the amorphous state until it reaches the treatment temperature for obtaining the perovskite complex oxide.

The amorphous substance can be obtained by reacting an aqueous solution containing R element ions and T element ions with an alkaline carbonate, carbonate containing ammonium ions or other such precipitant at a reaction temperature not higher than 60 °C and pH of 6 or higher, separating the so-obtained precipitate from the solution, and washing and drying the separated precipitate. Still more specifically, an aqueous solution containing a water-soluble nitrate, sulfate, chloride or other mineral acid salt of R and a water-soluble nitrate, sulfate, chloride or other mineral acid salt of T is prepared to have a mole ratio of R element(s) and T element(s) of about 1 : 1 (the number of R elements and/or T elements can be two or more, in which case the elements should be dissolved so that the mole ratio of all R elements and all T elements is about 1 : 1) and the precursor substance is precipitated from the solution using a precipitant or, if desired, a precipitant and a reducing agent. Although the mole ratio between the R element(s) and the T element(s) should ideally be made about 1 : 1, the perovskite complex oxide can be formed even if the mole ratio is not 1 : 1. Therefore, the mole ratio of the R element(s) and T element(s) can deviate from 1 : 1 insofar as it is a value enabling formation of the perovskite complex oxide.

Having defined R and T as the principal components, it is possible to replace part of R and/or T with an alkali metal or an alkali earth metal. When producing a perovskite complex oxide having part of R and/or T replaced with an alkali metal or alkali earth metal, ions of the alkali metal and/or alkali earth metal are included in the solution for generating the precipitate, whereby, similarly to the foregoing, there can be obtained an amorphous precursor substance. Examples of the alkali metal and alkali earth metal include Li, K, Na, Mg, Sr, Ca, Ba and the like. In addition, support materials such as alumina, silica, titania, zirconia and the like or heat-resistant support materials such as complex oxides thereof can be added to the precursor substance so long as the amount of addition is within a range that does not impair the effect of the present invention. In this case, when the precursor substance is heat treated together with such a support material, the perovskite complex oxide is obtained in a state carried on the support material.

The upper limit of the R and T ion concentrations in the solution to be precipitated is determined by the solubility of the salt(s) used. However, since a state in which no crystalline compound of R and/or T is precipitated is preferable, the total ion concentration of R and T is usually preferably within the approximate range of 0.01 - 0.60 mole/L but may in some cases exceed 0.60 mole/L.

The amorphous precipitate can be obtained from the solution using a precipitant composed of carbonate containing an alkaline carbonate or ammonium ions. As such a precipitant there can be used sodium carbonate, sodium hydrogencarbonate, ammonium carbonate, ammonium hydrogencarbonate and the like. A base such as sodium hydroxide, ammonia or the like can also be added as required. After formation of the precipitate using sodium hydroxide or ammonia and the like, an amorphous material that is a precursor of perovskite complex oxide of high specific surface area can be obtained by blowing in carbon dioxide gas in the slurry. By adding a reducing agent in addition to such a precipitant, an amorphous precursor substance of still higher specific surface area can be produced. As the reducing agent there is preferably used a hydrogen-generating compound such as hydrazine or sodium borohydride. In some cases, formic acid, formalin, sodium sulfide or the like may be used.

For obtaining the amorphous precipitate, the pH is preferably controlled to 6 - 10 when the precipitant is used alone and to 6 - 12 when a reducing agent is also added. In either case, a pH below 6 is unsuitable because in this pH region the rare earth element R may not form a precipitate. On the other hand, when the precipitant is used alone, a pH exceeding 10 is unsuitable because in this pH region a crystalline precipitate of a hydroxide or the like may be formed without the precipitate formed becoming thoroughly amorphous. The pH can, however, be still higher when a reducing agent is added, but should not be higher than pH 12 because the precipitate may fail to become thoroughly amorphous.

Further, for obtaining the amorphous precipitate, the reaction temperature should be set to not higher than 60 °C. A reaction temperature above 60 °C is not preferable because when the reaction is started in this temperature region, crystalline compound particles of the rare earth element R and/or transition metal element T may be generated that restrain the precursor substance from becoming thoroughly amorphous.

The formed precipitate is preferably solid-liquid separated by filtering, centrifugal separation, decantation or the like and then washed with water to minimize impurity ion residue. The amorphous precipitate is dried, such as by air drying, heat drying or vacuum drying, and, when required, the dried product can be subjected to pulverization and/or classification.

The amorphous substance obtained in this manner is an ideal precursor substance for obtaining a perovskite complex oxide. That is, a perovskite complex oxide can be produced by heat-treating this precursor substance. The heat treatment temperature is not particularly limited. While any temperature that enables production of the perovskite complex oxide can be used, a temperature in the approximate range of 400 - 1000 °C, preferably 400 - 700 °C is suitable. Atmospheric air or any oxidizing atmosphere can be used as the heat treatment atmosphere. The heat treatment can also be carried out in a nitrogen atmosphere or the like having an oxygen content that enables production of the perovskite complex oxide.

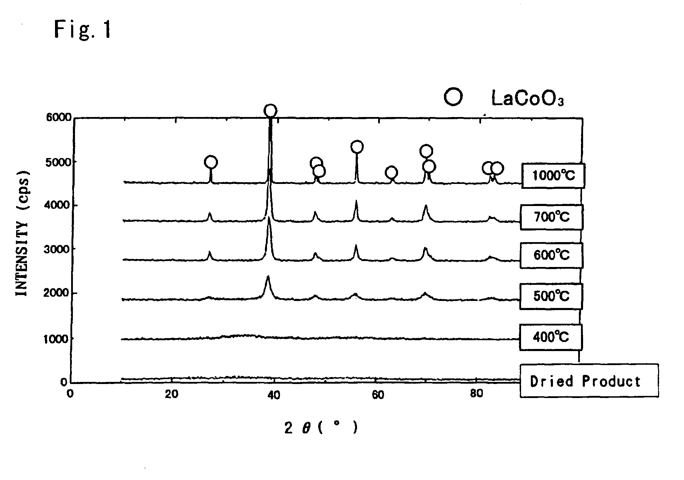

The present invention is characterized in using an amorphous substance as the precursor substance for producing a perovskite complex oxide. This point will be explained further. The inventors discovered that an amorphous precipitate can be obtained by, as explained in the foregoing, using an alkaline carbonate or carbonate containing ammonium ions as neutralizer and appropriately controlling the pH and reaction temperature. We further learned that the precursor substance obtained by solid-liquid separation and drying of the amorphous precipitate is capable of producing a perovskite complex oxide without passing through another crystal phase during heat treatment. Specifically, it enables production of a perovskite oxide crystalline phase by heat treatment at 500°C. The appearance is shown in Figure 1 as a behavior of X-ray diffraction patterns.

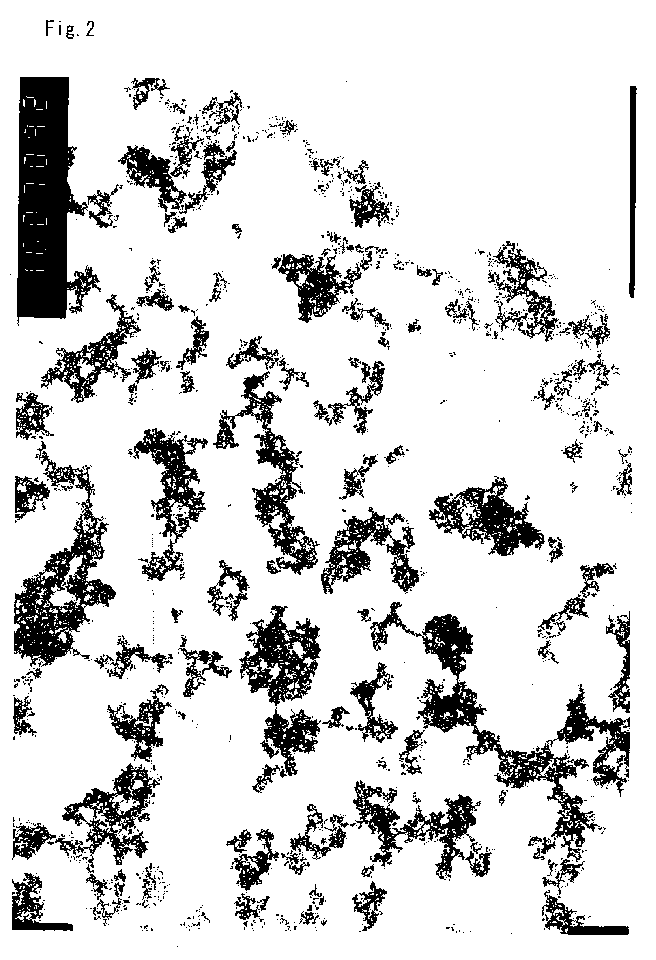

Figure 1 compares the X-ray diffraction patterns of heat-treated products obtained by heat-treating the dried precipitate of Example 1 set out below at different temperatures. The dried product before heat treatment was an amorphous substance with a broad pattern. It can be seen that it maintained its amorphous state even when heat treated at 400 °C and that a perovskite oxide phase of LaCoO₃ was produced from a relatively low temperature region of 500 °C. Figure 2 is a transmission electron micrograph of the precipitate obtained in Example 1. It can be seen that its La and Co are finely intermixed. Thus it can be seen that a perovskite complex oxide was directly produced from an amorphous substance of large specific surface area having finely intermixed La and Co at a relatively low heat treatment temperature of 500 °C. By this it is possible to produce a perovskite complex oxide of high specific surface area.

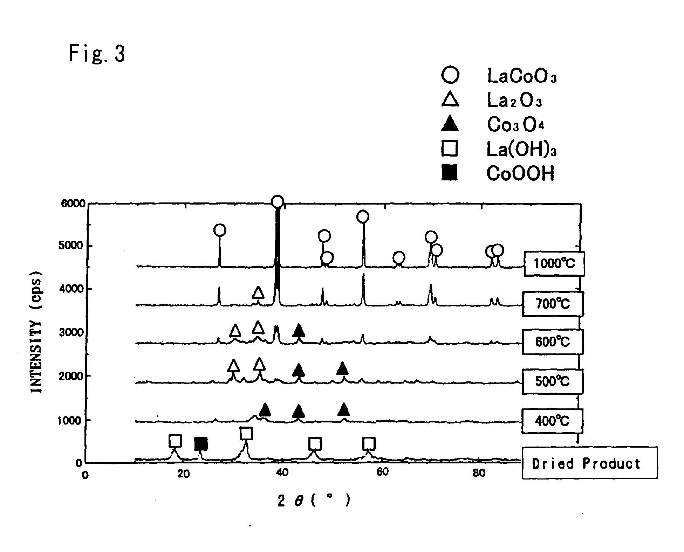

When an alkali hydroxide is used as a neutralizer for obtaining a neutralizing precipitate of R and T by the wet process, a hydroxide precipitate is generally formed. When this precipitate is dried and heat-treated, the hydroxide passes through an oxide on the way to becoming a perovskite complex oxide. When the heat treatment is conducted at 500 °C in this case, oxide of R (La) and oxide of T (Co) come to be present, while the amount of the desired perovskite complex oxide phase obtained is substantially nil. Even if the heat treatment temperature is raised to 700 °C, a slight amount of lanthanum oxide and other impurity phases still come to be included, so that a single phase of perovskite complex oxide cannot be obtained. This shown by the X-ray patterns of Figure 3.

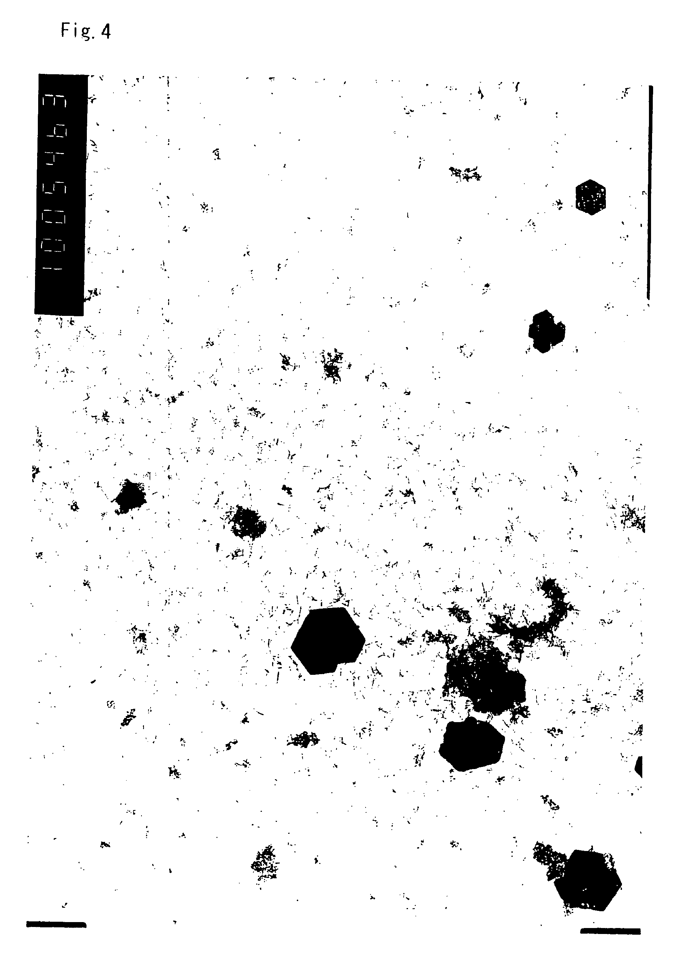

Figure 3 compares the X-ray diffraction patterns of heat-treated products obtained by heat-treating the dried precipitate of a Comparative Example (precipitate obtained using sodium hydroxide as neutralizer) at different temperatures. The dried product before heat treatment contained crystals of La(OH)₃, CoOOH and the like. When it was heat-treated at 400 - 600 °C, a large amount of La and Co oxide crystals appeared. When it was heat-treated at 700 °C, perovskite complex oxide phase predominated, but even then La oxide was present. When it was heated at 1000 °C, a single phase of perovskite complex oxide was produced. Figure 4 is a transmission electron micrograph of the precipitate obtained in the Comparative Example. The needle-like particles visible in the micrograph are lanthanum hydroxide and the hexagonal plate-like particles are cobalt hydroxide. In other words, lanthanum hydroxide and cobalt hydroxide were formed separately in the precipitate, so that regardless of how thoroughly the blending was conducted it was difficult to achieve uniformity at the particle level. Thus when a perovskite complex oxide is synthesized by a method that passes through hydroxides as in the Comparative Example, a high heat treatment temperature must be used to obtain the desired perovskite complex oxide crystal phase and, as a result, the specific surface area of the perovskite complex oxide is generally reduced to 10 m²/m or less.

In contrast, the present invention, by providing an amorphous substance as the precursor substance, enables production of a perovskite complex oxide phase at a low heat treatment temperature and therefore enables production of perovskite complex oxide having a specific surface area of greater than 10 m²/g, preferably greater than 20 m²/g, more preferably greater than 40 m²/g. Since a perovskite complex oxide having such a high specific surface area is excellent in surface activity, it exhibits outstanding performance unattainable heretofore when applied to catalysts, sensors and the like.

### Examples

### Example 1

Lanthanum nitrate and cobalt nitrate were mixed to obtain a mole ratio of elemental lanthanum to elemental cobalt of 1 : 1. A starting solution was prepared by adding water to this mixture in an amount that adjusted each of the elemental lanthanum and elemental cobalt present in the solution to a molar concentration of 0.2 mole/L. The temperature of the solution was adjusted to 25 °C under stirring. From the point the temperature reached 25 °C, addition of ammonium carbonate solution as precipitant was continued until the pH had been adjusted to 8. Next, precipitation was allowed to progress thoroughly by continuous stirring of the solution for 12 hours with the reaction temperature maintained at 25 °C. The precipitate obtained was harvested by filtering, washed with water, and dried at 110 °C. The so-obtained powder was called a precursor powder.

The BET specific surface area of the obtained precursor powder was found to be 109.0 m²/g. The result obtained by X-ray powder diffraction of the precursor powder is shown in Figure 1 as dried product. From the broad, peakless diffraction spectrum exhibited, the precursor powder was concluded to be an amorphous material. An electron micrograph of the precursor powder is shown in Figure 2.

Next, the precursor powder was calcined in an air atmosphere at 500 °C. The burned product was found to have a BET specific surface area of 49.3 m²/g and, as shown in Figure 1, was found by X-ray powder diffraction to be a perovskite oxide phase of LaCoO₃.

The precursor powder was also subjected to the same heat-treatment at heat treatment at temperatures of 400 °C, 600 °C, 700 °C and 1000 °C. The measured specific surface areas of the burned products are shown in Table 1 and their X-ray powder diffraction results are shown in Figure 1.

**Table 1**

| Heat treatment temperature (°C) | Specific surface area (m²/g) | X-ray powder diffraction result |
|---|---|---|
| 110 | 109.0 | Amorphous |
| 400 | 77.5 | Amorphous |
| 500 | 49.3 | LaCoO₃ |
| 600 | 36.3 | LaCoO₃ |
| 700 | 23.4 | LaCoO₃ |
| 1000 | 0.1 | LaCoO₃ |

From the results in Table 1 and Figure 1, it can be seen that the precursor powder obtained in this Example stayed amorphous even at 400 °C and produced a perovskite complex oxide phase from around 500 °C.

### Example 2

Example 1 was repeated, except that lanthanum nitrate, strontium nitrate and cobalt nitrate were mixed in at amounts that made the mole ratio of elemental lanthanum, elemental strontium and elemental cobalt 0.9 : 0.1 : 1.

The obtained precursor powder was calcined at a heat treatment temperature of 700 °C. The burned product had a specific surface area of 17.3 m²/g and was found by X-ray powder diffraction to be a perovskite complex oxide of (La_{0.9}Sr_{0.1})CoO₃.

### Example 3

Example 1 was repeated, except that lanthanum nitrate, strontium nitrate and cobalt nitrate were mixed in at amounts that made the mole ratio of elemental lanthanum, elemental strontium and elemental cobalt 0.8 : 0.2 : 1.

The obtained precursor powder calcined at a heat treatment temperature of 700 °C. The burned product had a specific surface area of 26.2 m²/g and was found by X-ray powder diffraction to be a perovskite complex oxide of (La_{0.8}Sr_{0.2})CoO₃.

### Example 4

Example 1 was repeated, except that lanthanum nitrate, strontium nitrate and cobalt nitrate were mixed in at amounts that made the mole ratio of elemental lanthanum, elemental strontium and elemental cobalt 0.7 : 0.3 : 1.

The obtained precursor powder was calcined at a heat treatment temperature of 700 °C. The burned product had a specific surface area of 26.0 m²/g and was found by X-ray powder diffraction to be a perovskite complex oxide of (La_{0.7}Sr_{0.3})CoO₃.

### Example 5

Example 1 was repeated, except that ammonium hydrogencarbonate was used as the precipitant. The obtained precursor powder was calcined at a heat treatment temperature of 700 °C. The burned product had a specific surface area of 20.5 m²/g and was found by X-ray powder diffraction to be a perovskite complex oxide of LaCoO₃.

### Example 6

Example 1 was repeated, except that sodium carbonate was used as the precipitant. The obtained precursor powder was calcined at a heat treatment temperature of 700 °C. The burned product had a specific surface area of 15 m²/g and was found by X-ray powder diffraction to be a perovskite complex oxide of LaCoO₃.

### Example 7

Example 1 was repeated, except that sodium bicarbonate was used as the precipitant. The obtained precursor powder was calcined at a heat treatment temperature of 700 °C. The burned product had a specific surface area of 16.8 m²/g and was found by X-ray powder diffraction to be a perovskite complex oxide of LaCoO₃.

### Comparative Example 1

Example 1 was repeated, except that addition of sodium hydroxide as precipitant was continued until the pH had been adjusted to 12. The obtained precipitate was filtered, washed with water and dried. The BET specific surface area of the obtained precursor powder was found to be 98.1 m²/g. From the result obtained by X-ray powder diffraction of the precursor powder shown in Figure 3 as dried product, it was concluded to be composed of lanthanum hydroxide and cobalt hydroxide. An electron micrograph of the precursor powder is shown in Figure 4.

The obtained precursor powder was calcined by heat-treatment at 500 °C. The burned product was found to have a BET specific surface area of 81.0 m²/g and when subjected to X-ray powder diffraction, exhibited a diffraction pattern that, as shown in Figure 3, had a main peak of cobalt oxide and almost no diffraction peak of the desired perovskite complex oxide.

The precursor powder was also calcined at heat treatment temperatures of 400, 600, 700 and 1000 °C. The X-ray powder diffraction results obtained for the burned products are shown in Figure 3 and their specific surface areas are indicated in Table 2.

**Table 2**

| Heat treatment temperature (°C) | Specific surface area (m²/g) | X-ray powder diffraction result |
|---|---|---|
| 110 | 98.1 | La(OH)₃+CoOOH |
| 400 | 81.0 | Co₃O₄ |
| 500 | 63.8 | La₂O₃+ Co₃O₄ |
| 600 | 39.9 | La₂O₃+ Co₃O₄+LaCoO₃ |
| 700 | 7.2 | La₂O₃+ LaCoO₃ |
| 1000 | 1.0 | LaCoO₃ |

It can be seen from Table 2 that the precursor powder of the Comparative Example was composed of La hydroxide and Co hydroxide and in the course of heat treatment passed through a crystalline compound of oxide type and then through a perovskite complex oxide. A high temperature exceeding 700 °C was therefore required to obtain the perovskite complex oxide single phase. As a result, the obtained perovskite complex oxide had a very small specific surface area.

The Examples that follow are ones in which precursor powders were produced using a precipitant and a reducing agent.

### Example 8

Lanthanum nitrate and cobalt nitrate were mixed to obtain a mole ratio of elemental lanthanum to elemental cobalt of 1 : 1. A starting solution was prepared by adding water to this mixture in an amount that adjusted the total of the elemental lanthanum and elemental cobalt present in the solution to a molar concentration of 0.2 mole/L. The temperature of the solution was adjusted to 25 °C under stirring. At the point the temperature reached 25°C, a precipitant and a reducing agent were added. Ammonium carbonate solution was added as the precipitant to adjust the pH to 10 and sodium borohydride was added as the reducing agent to a mole concentration in the solution of 0.05 mole/L. Next, precipitation was allowed to progress thoroughly by continuous stirring of the solution for 6 hours with the reaction temperature maintained at 25 °C. The precipitate obtained was harvested by filtering, washed with water, and dried at 110 °C, thereby affording a precursor powder.

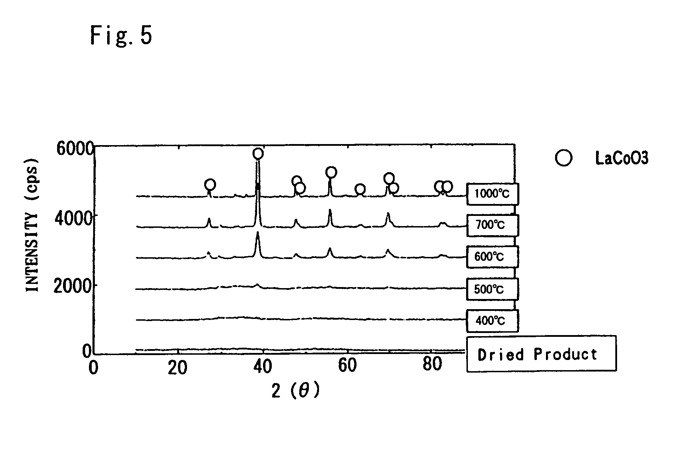

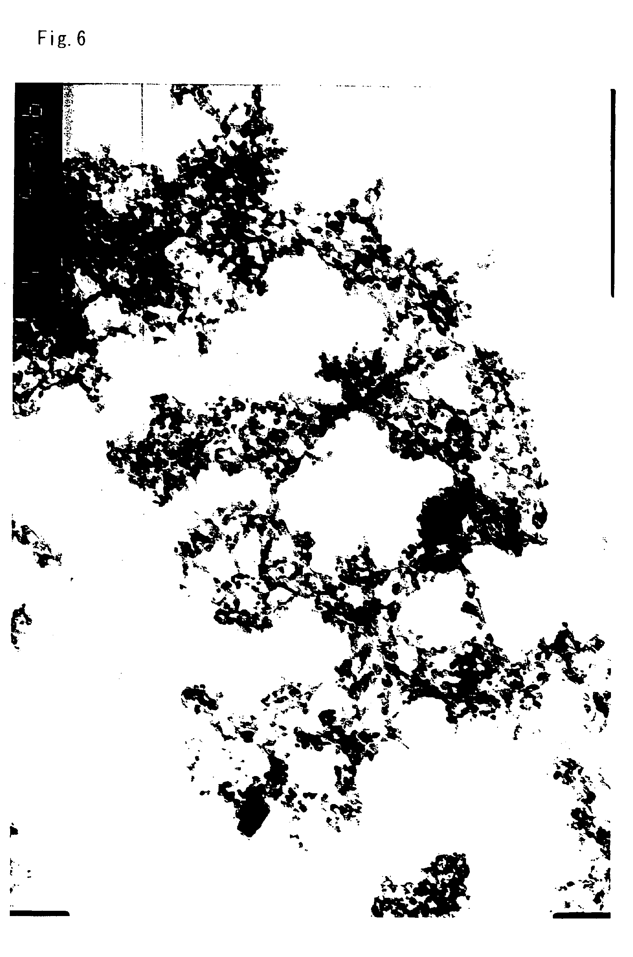

The BET specific surface area of the obtained precursor powder was found to be 111.9 m²/g. The result obtained by X-ray powder diffraction of the precursor powder is shown in Figure 5 at the chart designated "Dried product." From the broad, peakless diffraction spectrum exhibited, the precursor powder was concluded to be an amorphous material. An electron micrograph of the precursor powder is shown in Figure 6.

Next, the precursor powder was calcined in an air atmosphere at 600 °C. The burned product was found to have a BET specific surface area of 35.8 m²/g and, as shown in Figure 5 (600 °C), was found by X-ray powder diffraction to be a perovskite oxide phase of LaCoO₃.

The precursor powder was also subjected to the same heat-treatment at heat treatment at temperatures of 400 °C, 500 °C, 700 °C and 1000 °C. The measured specific surface areas of the burned products are shown in Table 3 and their X-ray powder diffraction results are shown in Figure 5. From the results in Table 3 and Figure 5, it can be seen that the precursor powder obtained in this Example produced a perovskite complex oxide phase from around 500 °C.

**Table 3**

| Heat treatment temperature (°C) | Specific surface area (m²/g) | X-ray powder diffraction result |
|---|---|---|
| 110 | 111.9 | Amorphous |
| 400 | 83.1 | Amorphous |
| 500 | 66.3 | LaCoO₃ |
| 600 | 35.8 | LaCoO₃ |
| 700 | 19.5 | LaCoO₃ |
| 1000 | 0.5 | LaCoO₃ |

### Example 9

Example 8 was repeated, except that lanthanum nitrate, strontium nitrate and cobalt nitrate were mixed in at amounts that made the mole ratio of elemental lanthanum, elemental strontium and elemental cobalt 0.8 : 0.2 : 1.

The obtained precursor powder was calcined at a heat treatment temperature of 600 °C. The burned product had a specific surface area of 35.6 m²/g and was found by X-ray powder diffraction to be a perovskite complex oxide of (La_{0.8}Sr_{0.2})CoO₃.

### Example 10

Example 8 was repeated, except that lanthanum nitrate and iron nitrate were mixed in at amounts that made the mole ratio of elemental lanthanum and elemental iron 1 : 1.

The obtained precursor powder was calcined at a heat treatment temperature of 600 °C. The burned product had a specific surface area of 46.5 m²/g and was found by X-ray powder diffraction to be a perovskite complex oxide of LaCoO₃.

### Example 11

Example 8 was repeated, except that lanthanum nitrate, strontium nitrate and iron nitrate were mixed in at amounts that made the mole ratio of elemental lanthanum, elemental strontium and elemental iron 0.8 : 0.2 : 1.

The obtained precursor powder was calcined at a heat treatment temperature of 600 °C. The burned product had a specific surface area of 50.4 m²/g and was found by X-ray powder diffraction to be a perovskite complex oxide of (La_{0.8}Sr_{0.2})FeO₃.

### Example 12

Example 10 was repeated, except that hydrazine was used as the reducing agent in place of sodium borohydride and was added to a mole concentration in the solution of 0.3 mole/L

The obtained precursor powder was calcined at a heat treatment temperature of 600 °C. The burned product had a specific surface area of 40.1 m²/g and was found by X-ray powder diffraction to be a perovskite complex oxide of LaCoO₃.

### Comparative Example 2

Example 10 was repeated, except that no reducing agent was added. The burned powder had a specific surface area of 28.8 m²/g. From the fact that the specific surface area decreased from 46.5 m²/g in Example 10 to 28.8 m²/g in this Comparative Example, that adding a reducing agent has an effect of increasing the specific surface area of the burned powder.

### Comparative Example 3

Example 9 was repeated, except that no reducing agent was added. The burned powder had a specific surface area of 23.4 m²/g. Thus the specific surface area decreased from 35.6 m²/g in Example 9 to 23.4 m²/g in this Comparative Example, again evidencing the effect of reducing agent addition.

Although it is not altogether clear why addition of a reducing agent improves the specific surface area, the inventors suppose that hydrogen gas generated in the course of neutralization owing to the presence of the reducing agent is taken into to the neutralizing precipitate as fine bubbles, thereby forming a porous precursor substance of large specific surface area.

### Example 13

Example 1 was repeated, except that the combination of ammonia and carbon dioxide was used as the precipitant wherein the first an aqueous ammonia was added to the solution until reaching PH 10, and then carbon dioxide gas was blown into the solution at a flow rate of 900 mL/min.

The obtained precursor powder was calcined at a heat treatment temperature of 700 °C. The burned product had a specific surface area of 26 m²/g and was found by X-ray powder diffraction to be a perovskite complex oxide of LaCoO₃.

### Example 14

Example 8 was repeated, except that an aqueous ammonia in place of ammonium carbonate solution was used as the precipitant and carbon dioxide gas was blown into the solution after the reducing agent was added.

The obtained precursor powder was calcined at a heat treatment temperature of 600 °C. The burned product had a specific surface area of 35.6 m²/g and was found by X-ray powder diffraction to be a perovskite complex oxide of LaCoO₃.

### Example 15

Example 12 was repeated, except that 1) Lanthanum nitride and iron nitride were mixed to obtain a mole ratio of elemental lanthanum to elemental iron of 1 : 1, 2) an aqueous ammonia was used in place of ammonium carbonate solution as the precipitant and 3) carbon dioxide gas was blown into the solution at a flow rate of 900 mL/min.

The obtained precursor powder was calcined at a heat treatment temperature of 600 °C. The burned product had a specific surface area of 44.6 m²/g and was found by X-ray powder diffraction to be a perovskite complex oxide of LaFeO₃.

## Claims

1. A method of producing a perovskite complex oxide wherein,
at the time of producing a perovskite (RTO₃) complex oxide phase by heat treating a precursor substance that is a powdery starting material containing at least one rare earth element R and at least one transition metal element T, there is used as the precursor substance an amorphous substance containing the R and T components at a content ratio required for producing the complex oxide.

2. A method of producing a perovskite complex oxide according to claim 1, wherein a perovskite complex oxide phase is generated by heat-treating the precursor substance at a temperature of 400 °C - 700 °C.

3. A method of producing a perovskite complex oxide according to claim 1, wherein the amorphous substance is a precipitated substance obtained by precipitation from an aqueous solution containing R ions and T ions using a precipitant.

4. A method of producing a perovskite complex oxide according to claim 1, wherein the amorphous substance is a precipitated substance obtained by precipitation from an aqueous solution containing R ions and T ions using a precipitant and a reducing agent.

5. A method of producing a perovskite complex oxide according to claim 3 or 4, wherein the precipitant is an alkaline carbonate or carbonate containing ammonium ions.

6. A method of producing a perovskite complex oxide according to claim 3 or 4, wherein the precipitant is a combination of ammonia and carbon dioxide.

7. A method of producing a perovskite complex oxide according to claim 4, 5 or 6 wherein the reducing agent is a hydrogen-generating compound.

8. A method of producing a perovskite complex oxide according any of claims 1 to 7, wherein the perovskite complex oxide has a BET specific surface area exceeding 10 m²/g.

9. A precursor substance of a perovskite complex oxide, which is a precursor substance to be subjected to heat treatment for producing a perovskite complex oxide phase composed of an amorphous substance containing R and T components at a content ratio required for producing the complex oxide, where R is at least one rare earth element and T is at least one transition metal element..

10. A precursor substance according to claim 9, wherein part of R is replaced by an alkali earth metal.
